# EUROPEAN PATENT SPECIFICATION

(11) **EP 3 163 844 B1**
(45) Date of publication and mention of the grant of the patent: **30.09.2020**
(21) Application number: 15003088.0
(22) Date of filing: 28.10.2015
(51) Int. Cl.: H04L 29/08, H04W 4/50, H04W 12/00

(54) **METHOD, SYSTEM AND DEVICE FOR ESTABLISHING AN HTTP-OTA SESSION BETWEEN A SECURE ELEMENT AND AN HTTP-OTA PLATFORM**
VERFAHREN, SYSTEM UND VORRICHTUNG ZUR HERSTELLUNG EINER HTTP-OTA-SITZUNG ZWISCHEN EINEM SICHEREN ELEMENT UND EINER HTTP-OTA-PLATTFORM
PROCÉDÉ, SYSTÈME ET DISPOSITIF PERMETTANT D'ÉTABLIR UNE SESSION HTTP-OTA ENTRE UN ÉLÉMENT SÉCURISÉ ET UNE PLATE-FORME HTTP-OTA

(43) Date of publication of application: 03.05.2017
(73) Proprietor: Giesecke+Devrient Mobile Security GmbH, 81677 München (DE)
(72) Inventor: Tea, Vui Huang, SE-12061 Stockholm (SE)

(56) References cited:
- US-A1- 2006 171 368
- US-A1- 2011 252 240
- US-A1- 2015 119 017
- US-A1- 2015 223 061
- Giesecke & Devrient: "White Paper The OTA Platform in the World of LTE", , 1 January 2011 (2011-01-01), XP055111231, Retrieved from the Internet: URL:http://www.carabinerpr.com/pdf/WP_OTA_ and_LTE_Jan_11.pdf [retrieved on 2014-04-01]

## Description

The invention relates to a method for establishing an HTTP-OTA session between a secure element connected to a mobile device and an HTTP-OTA platform within a mobile network.

In mobile networks and particularly in 4G and 5G mobile networks, HTTP-OTA (HTTP = Hypertext Transfer Protocol, OTA = Over The Air) is a common technology to enable a remote management of the content stored in a UICC or other secure elements (UICC = Universal Integrated Circuit Card).

Currently, there are three ways of initiating an HTTP-OTA session, namely HTTP-PUSH, HTTP-POLL and HTTP-PULL. The most desirable mechanism is HTTP-PUSH where a remote service can initiate an update of the secure element by sending an SMS message to the secure element (SMS = Short Message Service). However, due to the use of SMS, HTTP-PUSH may not be compatible with existing mobile networks because some mobile networks no longer enable SMS or the use of SMS is only optional in those networks.

According to the HTTP-PULL mechanism, the initiation of an HTTP-OTA session is coupled to a user input on the mobile device carrying the secure element. This has the disadvantage that the user who will not know about updates on the secure element needs to be involved in this process.

According to the HTTP-POLL mechanism, the secure element initiates an HTTP-OTA session in regular or irregular time intervals by itself. In case of short polling intervals, this will result in a high battery consumption of the mobile device carrying the secure element. Though the polling intervals may be prolonged, this leads to the disadvantage that there might be a long time delay for updating the secure element based on HTTP-OTA.

In order to avoid the disadvantage of sending SMS messages in the HTTP-PUSH mechanism, it has been proposed to use the SIP protocol (SIP = Session Initiation Protocol) for triggering an HTTP-OTA session. However, this requires a SIP client on the mobile device carrying the secure element. Such clients are rarely used in mobile devices on the market.

US2015/0223061A1 relates to a method of establishing a OTA session between a server and a mobile device, wherein the user initiates the session by manually entering a code into the mobile device.

US2011/0252240A1 relates to a method of establishing a connection between a mobile device and a server using a push notification.

US2015/119017A1 which discloses the features of the preamble of claim 1 describes a method for implementing smart card remote operation based on a smart card web server. In this method, a remote management server transmits a short message to a mobile phone whereupon the mobile phone transmits the short message to the smart card web server in the smart card, resulting in the establishment of a data channel for communications with the remote management server.

US2006/171368A1 discloses the establishment of a packet data session between a remote wireless unit and a target destination. To do so, a wireless voice channel is established between a requester application and the remote wireless unit based on a voice call, whereupon the requester application transmits a request message to the remote wireless unit via the wireless voice channel, resulting in the initiation of the packet data session.

It is an object of the invention to provide a mechanism for establishing an HTTP-OTA session avoiding the above disadvantages and being compatible with many mobile networks and mobile devices.

This object is solved by the method according to independent claim 1 and by the system according to independent claim 11. Preferred embodiments of the invention are defined in the dependent claims.

The method according to the invention establishes an HTTP-OTA session between a secure element connected to a mobile device and an HTTP-OTA platform within a mobile network. The secure element is preferably a UICC, particularly a SIM/USIM card. The term mobile device is to be interpreted broadly and refers to any device having the capability to communicate in the corresponding mobile network. The mobile network may be any known mobile network and particularly a 4G or 5G network. Preferably, the secure element is inserted into the mobile device or permanently integrated in the mobile device (e.g. as an embedded UICC).

According to the method of the invention, the HTTP-OTA platform initiates a transmission of a first notification to the mobile device, the first notification being a voice call to a special designated number. In an embodiment not belonging to the invention, the first notification is a MDM message. Preferably, the initiation of the transmission of the first notification is triggered by a request (e.g. an API request; API = Application Programming Interface) sent from a service to the HTTP-OTA platform. The service sending this request wishes to update information on the secure element. The exchange of MDM messages (MDM = Mobile Device Management) is well-known for a skilled person. Those messages are used to manage a mobile device, e.g. to configure the mobile device and to switch on or switch off functions of the mobile device.

Triggered by the first notification received in the mobile device, a second notification comprising one or more predetermined STK events and/or one or more predetermined STK commands is transmitted by the mobile device to the secure element. The term STK stands for SIM Application Toolkit and shall comprise all known standards providing mechanisms allowing applications on a secure element to interact or operate with a mobile device. Particularly, the term STK comprises the classic SIM Application Toolkit for SIM cards according to standard 3GPP TS 11.14 as well as the USIM Application Toolkit as defined in standard 3GPP 31.111 and the Card Application Toolkit according to standard ETSI TS 102 223. Corresponding STK events and STK commands are known from the above mentioned standards.

In a final step of the method according to the invention, triggered by the second notification received in the secure element, an HTTP-OTA session with the HTTP-OTA platform is initiated by the secure element.

The method of the invention has the advantage that SMS messages are no longer needed for initiating an HTTP-OTA session. Instead, voice calls are used. This has the additional advantage that a SIP client is not needed in the mobile device so that the method is compatible with many mobile devices. Moreover, the invention allows the HTTP-OTA platform to trigger the initiation of the HTTP-OTA session, thus avoiding the drawbacks of the HTTP-PULL and HTTP-POLL mechanisms.

In an embodiment not belonging to the invention, the step of initiating the transmission of the first notification is such that the HTTP-OTA platform contacts an MDM server with a corresponding instruction which triggers the MDM server to transmit the MDM message to the mobile device. Alternatively, the HTTP-OTA platform contacts a voice server with a corresponding instruction triggering the voice server to transmit the voice call to the mobile device.

MDM messages according to any known protocol may be used. Particularly, the MDM message may be a message based on the OMA Device Management Protocol (OMA = Open Mobile Alliance). Alternatively, propriety protocols may be used for the MDM message, e.g. Google Cloud Messaging, Apple Push Notification or a push service from Giesecke & Devrient.

In another embodiment of the invention, the content of the one or more predetermined STK events and/or the time sequence of transmission of the one or more predetermined STK events encode information which instructs the secure element to initiate the HTTP-OTA session with the HTTP-OTA platform. In a preferred variant of this embodiment the second notification only includes the one or more predetermined STK events (i.e. no STK commands).

Any known STK events may be used for triggering the initiation of an HTTP-OTA session. Preferably, the one or more predetermined STK events comprise one or more of the following STK events: MT call, Call connected, Call disconnected, Location status, User activity, Idle screen available, Card reader status, Language selection, Browser termination, Data available, Channel status.

In case that STK commands are used for triggering the initiation of the HTTP-OTA session, the one or more predetermined STK commands preferably comprise one or more TERMINAL PROFILE commands and/or one or more STATUS commands. In a preferred variant of this embodiment, the second notification only includes the one or more predetermined STK commands (i.e. no STK events).

In preferred embodiments, the trigger for initiating the HTTP-OTA session by the second notification may be combined with the known HTTP-POLL mechanism. In one variant of such embodiments, upon receipt of the first notification, the mobile device sends a TERMINAL PROFILE command to the secure element in order to initiate (particularly re-initiate) the HTTP-POLL mechanism, where based on this mechanism, after a predetermined number of STATUS commands transmitted by the mobile device to the secure element, an HTTP-OTA session with the HTTP-OTA platform is initiated by the secure element. In other words, the initiation of an HTTP-OTA session is repeated after the transmission of the predetermined number of STATUS commands.

In one variant of the above embodiment, the TERMINAL PROFILE command is sent by the mobile device to the secure element immediately after receipt of the first notification. Alternatively, the mobile device may reset the secure element after receipt of the first notification, whereupon (i.e. triggered by the reset) the TERMINAL PROFILE command is sent by the mobile device to the secure element.

In another embodiment of the invention, an already initiated HTTP-POLL mechanism is used for triggering the initiation of an HTTP-OTA session. As defined above, based on the (already initiated) HTTP-POLL mechanism, after a predetermined number of STATUS commands transmitted by the mobile device to the secure element, an HTTP-OTA session with the HTTP-OTA platform is initiated by the secure element.

When using an already existing HTTP-POLL mechanism, there are two preferred variants in order to initiate an HTTP-OTA session. In a first variant, upon receipt of the first notification, the mobile device adjusts the HTTP-POLL mechanism by shortening a predefined polling interval between successive transmissions of the STATUS commands from the mobile device to the secure element. This will shorten the time until an initiation of an HTTP-OTA session. Preferably, after the initiation of the HTTP-OTA session, the polling interval is reset to its original value. In a second variant, upon receipt of the first notification, the mobile device transmits the predetermined number of STATUS commands at once (i.e. without intervals therebetween) to the secure element. Hence, the initiation of an HTTP-OTA session is accomplished in short time upon receipt of the first notification.

Besides the above method, the invention refers to a system comprising an HTTP-OTA platform within a mobile network and a mobile device with a secure element connected thereto, where the system is configured to perform the method of the invention or one or more preferred embodiments of the method of the invention.

Furthermore, the invention refers to a mobile device with a secure element connected thereto, where the mobile device and the secure element are configured to be used in the method of the invention or one or more preferred embodiments of the method of the invention. In other words, the mobile device and the secure element include means enabling the functions for performing the method of the invention or preferred embodiments thereof.

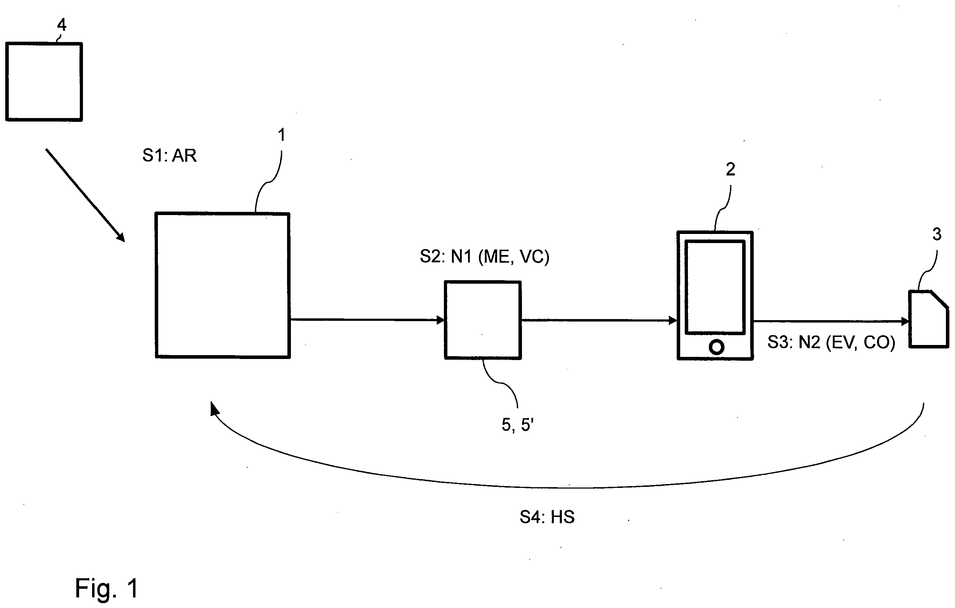

In the following, an embodiment of the invention will be described in detail with respect to the accompanying Fig. 1. This figure is a schematic illustration of a system for establishing an HTTP-OTA session according to an embodiment of the invention.

Fig. 1 shows an HTTP-OTA platform/ server 1 within a mobile network which is preferably a 4G or 5G network. Furthermore, Fig. 1 illustrates a mobile device 2 in the form of a smartphone in which a secure element 3 in the form of a UICC is inserted. In order to update information (e.g. applications) on the secure element 3, the well-known HTTP-OTA mechanism with the aid of the HTTP-OTA platform 1 is used. The invention described herein refers to a new method in order to initiate a corresponding HTTP-OTA session for updating information on the secure element.

In the scenario of Fig. 1, a remote service 4, e.g. an operator of a specific application on the secure element 3, wishes to update information on the secure element. To do so, the remote service 4 sends in step S1 an API request to the HTTP-OTA server 1 in order to instruct the server to establish an HTTP-OTA session with the secure element 3. In prior art systems, the HTTP-OTA platform would initiate an HTTP-PUSH resulting in an SMS message sent to the mobile device 2 in order to trigger an HTTP-OTA session. Contrary to that, according to the invention described herein, other messages not being based on SMS are transmitted to the mobile device 2, as will be explained in the following.

In a first variant not belonging to the invention, a first notification N1 in the form of a so-called MDM message ME is transmitted in step S2 to the mobile device 2. Such MDM messages are well-known for a skilled person and may be implemented by open source protocols, e.g. the OMA Device Management Protocol, or alternatively by propriety protocols. Examples of propriety protocols have been mentioned in the foregoing.

When using MDM messages in step S2, a corresponding device client is implemented on the mobile device 2. For transferring the MDM message to this client, an MDM server 5 is used. This server sends the MDM message to the client in the mobile device 2. For initiating this transmission, the HTTP-OTA platform 1 contacts the server 5 with a corresponding command for triggering the transmission of the MDM message ME. Instead of using an MDM message, a voice call VC may be addressed to the mobile device 2. To do so, the HTTP-OTA platform 1 contacts a voice server 5' instead of an MDM server 5 for triggering the corresponding voice call VC.

The MDM message ME or the voice call VC received in the mobile device 2 are encoded such that the mobile device 2 knows upon receipt of the message or the call that a specific second notification N2 shall be sent to the secure element 3. E.g., the number of the voice call VC may be a specific number where the mobile device 2 knows to send a specific notification N2 upon receipt of a voice call with this specific number.

As mentioned above, the receipt of the first notification N1 triggers the transmission of the second notification N2 from the mobile device 2 to the secure element 3. The transmission of the notification N2 is performed in step S3 of Fig. 1. In one variant of the invention, the notification N2 is a special STK event or a sequence of STK events EV where the event or the sequence of events encode the information that the secure element shall initiate a HTTP-OTA session HS with the platform 1. This initiation of the HTTP-OTA session is performed in step S4 of Fig. 1. Alternatively or additionally to STK events, one or more STK commands may be transmitted as notification N2 from the mobile device 2 to the secure element 3 in order to instruct the secure element to initiate the HTTP-OTA session HS according to step S4 of Fig. 1.

In the following, different variants for triggering an HTTP-OTA session by STK events or STK commands will be described. At first, variants of STK events are explained. In one variant, the mobile device 2 transmits a call disconnect STK event to the secure element 3 in case that the mobile device receives a voice call VC with a special designated number. Hence, the call will not be picked up by the mobile device. However, the call disconnect event transferred to the secure element will instruct the secure element to initiate the HTTP-OTA session according to step S4. This variant of the invention has the advantage that no specific client for processing MDM messages needs to be installed on the mobile device.

By way of example, the following STK events with corresponding parameters for instructing a secure element to initiate an HTTP-OTA session may be used according to the invention:

| | **SIM Event** | **SIM Event parameters / data coding** |
|---|---|---|
| 1. | MT call | Special unused phone numbers, e.g. '77777777777', or unique combination in rapid or sequenced succession, e.g. less than 2 STATUS commands apart etc. |
| 2. | Call connected | Special values or unique combination of call connect reasons in rapid or sequenced succession, e.g. less than 2 STATUS commands apart |
| | | etc. |
| 3. | Call disconnected | Special values or unique combination of call disconnect reasons in rapid or sequenced succession, e.g. less than 2 STATUS commands apart etc. |
| 4. | Location status | Special values or unique combination of locations in rapid or sequenced succession, e.g. less than 2 STATUS commands apart etc. |
| 5. | User activity | Special values or unique combination of user activity in rapid or sequenced succession, e.g. less than 2 STATUS commands apart etc. |
| 6. | Idle screen available | Special values or unique combination of availability in rapid or sequenced succession, e.g. less than 2 STATUS commands apart etc. |
| 7. | Card reader status | Special values or unique combination of status in rapid or sequenced succession, e.g. less than 2 STATUS commands apart etc. |
| 8. | Language selection | Special values or unique combination of languages in rapid or sequenced succession, e.g. less than 2 STATUS commands apart etc. |
| 9. | Browser Termination | Special values or unique combination of terminations in rapid or sequenced succession, e.g. less than 2 STATUS commands apart etc. |
| 10. | Data available | Special values or unique combination of availability in rapid or sequenced succession, e.g. less than 2 STATUS commands apart etc. |
| 11. | Channel status | Special values or unique combination of status in rapid or sequenced succession, e.g. less than 2 STATUS commands apart etc. |

If one of the above events is detected by the secure element 3, an HTTP-OTA session with the HTTP-OTA server 1 will be initiated by the secure element. To do so, a corresponding polling or IP push applet on the secure element monitors for those specific STK events and will initiate a HTTP-OTA session upon receipt of such events.

When using STK commands in order to instruct the secure element to initiate a HTTP-OTA session, this initiation may be directly coupled to the receipt of an STK command or a sequence of STK commands, as it is the case for the STK events. However, in alternative embodiments, an HTTP-POLL mechanism implemented between the mobile device 2 and the secure element 3 may be used such that the initiation of the HTTP-OTA session is indirectly triggered by corresponding STK commands.

The HTTP-POLL mechanism is well-known from the prior art. According to this mechanism, on power up of the mobile device, a polling applet on the secure element will count the number of STATUS commands from the mobile device. If the STATUS count matches an internal counter set from the personalization of the secure element or from a previous HTTP session, the polling applet will start an HTTP-OTA session with the HTTP-OTA server. The STATUS commands trigger is re-enabled when the mobile device is powered down and powered up again. After powering up, the mobile device will send a TERMINAL PROFILE STK command to the secure element. Thereafter, successive transmissions of STATUS commands from the mobile device to the secure element are started based on the HTTP-POLL mechanism.

The above described HTTP-POLL mechanism may be used to indirectly trigger the initiation of an HTTP-OTA session, as will be explained below. In a first variant, when the mobile device receives a notification N1, the mobile device will reset the secure element if it is not in use. Otherwise, the mobile device will wait for the secure element to be idle and then reset the element. As a consequence of this reset, the TERMINAL PROFILE STK command will be transmitted from the mobile device to the secure element. This will initiate the above described HTTP-POLL mechanism so that the secure element will initiate the HTTP-OTA session after a predetermined number of STATUS commands has been transmitted to the secure element.

In a second variant, after having received the notification N1, the mobile device will not reset the secure element but it will send immediately the TERMINAL PROFILE command to the secure element in order to start the HTTP-POLL mechanism which will result in the initiation of the HTTP-OTA session after a predetermined number of STATUS commands has been transmitted to the secure element.

In a third variant, an already established HTTP-POLL mechanism is adapted by shortening the polling interval between successive transmissions of STATUS commands. In other words, when the mobile device receives the notification N1, the device will change the current polling interval to a shorter interval so that STATUS commands are sent more rapidly to the secure element. As a result, the predetermined number of STATUS commands will be transmitted in shorter time to the secure element so that the HTTP-OTA session is initiated in shorter time.

In a fourth variant, analogously to the third variant, an already established HTTP-POLL mechanism will be used in order to initiate the HTTP-OTA session. However, instead of shortening the polling interval, the mobile device will immediately send, after having received the notification N1, the predefined number of STATUS commands at once (i.e. without polling intervals therebetween) to the secure element. This results in an immediate initiation of the HTTP-OTA session by the secure element.

The embodiments as described in the foregoing have several advantages. In particular, due to the use of MDM messages or voice calls, the transmission of SMS messages can be dispensed with. Hence, the invention can also be used in mobile networks in which SMS transmissions are no longer possible. Moreover, a SIP client which is rarely used in mobile devices is not required so that the invention can be used for many different mobile devices available on the market.

Also, some mobile devices require a model-specific or vendor-specific proprietary MDM client to be installed on each mobile device to process MDM messages, with this invention the hassle of the MDM client is not required so that the invention can be widely used for many different mobile devices available on the market with negligible software installation logistic and support issues. The MNO can also save costs on MDM server and client licensing fees if it is not used for any other purposes. Some phones do not support or have limited MDM support as well.

### Reference list

- 1: HTTP-OTA platform
- 2: mobile device
- 3: secure element
- 4: remote service
- 5: MDM server
- 5': voice server
- AR: API request
- N1: first notification
- N2: second notification
- ME: MDM message
- VC: voice call
- EV: STK event
- CO: STK command
- HS: HTTP-OTA session
- S1, S2, S3, S4: steps

## Claims

1. A method for establishing an HTTP-OTA session (HS) between a secure element (3) connected to a mobile device (2) and an HTTP-OTA platform (1) within a mobile network, where HTTP stands for Hypertext Transfer Protocol and OTA stands for Over The Air, wherein
- the HTTP-OTA platform (1) initiates a transmission of a first notification (N1) to the mobile device (2);
- triggered by the first notification (N1) received in the mobile device (2), a second notification (N2) comprising one or more predetermined STK events (EV) and/or one or more predetermined STK commands (CO) is transmitted by the mobile device (2) to the secure element (3), where STK stands for SIM Application Toolkit;
- triggered by the second notification (N2) received in the secure element (3), an HTTP-OTA session (HS) with the HTTP-OTA platform (1) is initiated by the secure element (3);
**characterized in that** the first notification (N1) is a voice call (VC) to a special designated number.

2. The method according to claim 1, wherein, for initiating the transmission of the first notification (N1), the HTTP-OTA platform (1) contacts a voice server (5') whereupon whereupon the voice server (5') transmits the voice call (VC) to the mobile device (2).

3. The method according to claim 1 or 2, wherein the content of the one or more predetermined STK events and/or the time sequence of transmission of the one or more predetermined STK events (EV) encode an information which instructs the secure element (3) to initiate the HTTP-OTA session (HS) with the HTTP-OTA platform (1).

4. The method according to one of the preceding claims, wherein the one or more predetermined STK events (EV) comprise one or more of the following STK events:
MT call, Call connected, Call disconnected, Location status, User activity, Idle screen available, Card reader status, Language selection, Browser termination, Data available, Channel status.

5. The method according to one of the preceding claims, wherein the one or more predetermined STK commands (CO) comprise one or more TERMINAL PROFILE commands and/or one or more STATUS commands.

6. The method according to one of the preceding claims, wherein, upon receipt of the first notification (N1), the mobile device (2) sends a TERMINAL PROFILE command to the secure element (3) in order to initiate an HTTP-POLL mechanism, where based on the HTTP-POLL mechanism, after a predetermined number of STATUS commands transmitted by the mobile device (2) to the secure element (3), an HTTP-OTA session (HS) with the HTTP-OTA platform (1) is initiated by the secure element (3).

7. The method according to claim 6, wherein the mobile device (2) sends the TERMINAL PROFILE command to the secure element (3) immediately after receipt of the first notification (N1).

8. The method according to claim 6, wherein the mobile device (2) resets the secure element (3) after receipt of the first notification (N1), whereupon the TERMINAL PROFILE command is sent by the mobile device (2) to the secure element (3).

9. The method according to one of the preceding claims, wherein
- before receipt of the first notification (N1), a HTTP-POLL mechanism is already initiated, where based on the HTTP-POLL mechanism, after a predetermined number of STATUS commands transmitted by the mobile device (2) to the secure element (3), an HTTP-OTA session (HS) with the HTTP-OTA platform (1) is initiated by the secure element (3);
- upon receipt of the first notification (N1), either the mobile device (2) adjusts the HTTP-POLL mechanism by shortening a predefined polling interval between successive transmissions of the STATUS commands from the mobile device (2) to the secure element (3) or the mobile device (2) transmits the predetermined number of STATUS commands at once to the secure element (SE).

10. A system comprising an HTTP-OTA platform (1) within a mobile network and a mobile device (2) with a secure element (3) connected thereto, where HTTP stands for Hypertext Transfer Protocol and OTA stands for Over The Air, wherein the system is configured to perform the following steps:
- the HTTP-OTA platform (1) initiates a transmission of a first notification (N1) to the mobile device (2);
- triggered by the first notification (N1) received in the mobile device (2), a second notification (N2) comprising one or more predetermined STK events (EV) and/or one or more predetermined STK commands (CO) is transmitted by the mobile device (2) to the secure element (3), where STK stands for SIM Application Toolkit;
- triggered by the second notification (N2) received in the secure element (3), an HTTP-OTA session (HS) with the HTTP-OTA platform (1) is initiated by the secure element (3);
**characterized in that** the first notification (N1) is a voice call (VC) to a special designated number.

11. The system according to claim 10, where the system is configured to perform a method according to one of claims 2 to 9.

12. Mobile device (2) with a secure element (3) connected thereto, where the mobile device (2) and the secure element (3) are configured to perform the following steps:
- triggered by a first notification (N1) received in the mobile device (2), a second notification (N2) comprising one or more predetermined STK events (EV) and/or one or more predetermined STK commands (CO) is transmitted by the mobile device (2) to the secure element (3), where STK stands for SIM Application Toolkit;
- triggered by the second notification (N2) received in the secure element (3), an HTTP-OTA session (HS) with an HTTP-OTA platform (1) is initiated by the secure element (3), where HTTP stands for Hypertext Transfer Protocol and OTA stands for Over The Air;
**characterized in that** the first notification (N1) is a voice call (VC) to a special designated number.

13. Mobile device (2) with a secure element (3) connected thereto according to claim 12, where the mobile device (2) and the secure element (3) are adapted to be used in method steps performed in the mobile device and/or the secure element according to one of claims 2 to 9.

## Patentansprüche

1. Verfahren zum Aufbau einer HTTP-OTA-Sitzung (HS) zwischen einem sicheren Element (3), das mit einem Mobilgerät (2) verbunden ist, und einer HTTP-OTA-Plattform (1) innerhalb eines mobilen Netzwerks, wobei HTTP für Hypertext Transfer Protocol und OTA für Over The Air steht, wobei
- die HTTP-OTA-Plattform (1) eine Übertragung einer ersten Benachrichtigung (N1) an das Mobilgerät (2) initiiert;
- ausgelöst durch die erste Benachrichtigung (N1), die in dem Mobilgerät (2) empfangen wird, eine zweite Benachrichtigung (N2), die ein oder mehrere vorbestimmte STK-Ereignisse (EV) und/oder einen oder mehrere vorbestimmte STK-Befehle (CO) umfasst, von dem Mobilgerät (2) an das sichere Element (3) übertragen wird, wobei STK für SIM Application Toolkit steht;
- ausgelöst durch die zweite Benachrichtigung (N2), die im sicheren Element (3) empfangen wird, eine HTTP-OTA-Sitzung (HS) mit der HTTP-OTA-Plattform (1) durch das sichere Element (3) initiiert wird;
**dadurch gekennzeichnet, dass** die erste Benachrichtigung (N1) ein Sprachanruf (VC) an eine speziell bestimmte Nummer ist.

2. Verfahren nach Anspruch 1, wobei die HTTP-OTA-Plattform (1) zum Initiieren der Übertragung der ersten Benachrichtigung (N1) einen Sprachserver (5') kontaktiert, woraufhin der Sprachserver (5') den Sprachanruf (VC) an das Mobilgerät (2) überträgt.

3. Verfahren nach Anspruch 1 oder 2, wobei der Inhalt des einen oder mehrerer vorbestimmter STK-Ereignisse und/oder die Zeitfolge der Übertragung des einen oder mehrerer vorbestimmter STK-Ereignisse (EV) eine Information kodieren, die das sichere Element (3) anweist, die HTTP-OTA-Sitzung (HS) mit der HTTP-OTA-Plattform (1) zu initiieren.

4. Verfahren gemäß einem der vorhergehenden Ansprüche, wobei das eine oder mehrere vorbestimmte STK-Ereignisse (EV) ein oder mehrere der folgenden STK-Ereignisse umfassen:
MT-Anruf, Anruf verbunden, Anruf getrennt, Standortstatus, Benutzeraktivität, Ruhebildschirm verfügbar, Kartenleser-Status, Sprachauswahl, Browser-Terminierung, Daten verfügbar, Kanalstatus.

5. Verfahren gemäß einem der vorhergehenden Ansprüche, wobei der eine oder die mehreren vorbestimmten STK-Befehle (CO) einen oder mehrere TERMINAL PROFILE-Befehle und/oder einen oder mehrere STATUS-Befehle umfassen.

6. Verfahren gemäß einem der vorhergehenden Ansprüche, wobei bei Empfang der ersten Benachrichtigung (N1) das Mobilgerät (2) einen TERMINAL PROFILE-Befehl an das sichere Element (3) sendet, um einen HTTP-POLL-Mechanismus zu initiieren, wobei basierend auf dem HTTP-POLL-Mechanismus nach einer vorbestimmten Anzahl von STATUS-Befehlen, die von dem Mobilgerät (2) an das sichere Element (3) übertragen werden, eine HTTP-OTA-Sitzung (HS) mit der HTTP-OTA-Plattform (1) durch das sichere Element (3) initiiert wird.

7. Verfahren nach Anspruch 6, wobei das Mobilgerät (2) den Befehl TERMINAL PROFILE unmittelbar nach Empfang der ersten Benachrichtigung (N1) an das sichere Element (3) sendet.

8. Verfahren nach Anspruch 6, wobei das Mobilgerät (2) das sichere Element (3) nach dem Empfang der ersten Benachrichtigung (N1)1 zurücksetzt, woraufhin der Befehl TERMINAL PROFILE von dem Mobilgerät (2) an das sichere Element (3) gesendet wird.

9. Verfahren nach einem der vorhergehenden Ansprüche, wobei
- ein HTTP-POLL-Mechanismus bereits vor Empfang der ersten Benachrichtigung (N1) initiiert wird, wobei auf der Grundlage des HTTP-POLL-Mechanismus nach einer vorbestimmten Anzahl von STATUS-Befehlen, die von dem Mobilgerät (2) an das sichere Element (3) übertragen werden, eine HTTP-OTA-Sitzung (HS) mit der HTTP-OTA-Plattform (1) durch das sichere Element (3) initiiert wird;
- bei Empfang der ersten Benachrichtigung (N1) entweder das Mobilgerät (2) den HTTP-POLL-Mechanismus durch Verkürzung eines vordefinierten Abfrageintervalls zwischen aufeinanderfolgenden Übertragungen der STATUS-Befehle vom Mobilgerät (2) an das sichere Element (3) anpasst oder das Mobilgerät (2) die vorbestimmte Anzahl von STATUS-Befehlen auf einmal an das sichere Element (SE) überträgt.

10. Ein System, das eine HTTP-OTA-Plattform (1) innerhalb eines mobilen Netzwerks und ein Mobilgerät (2) mit einem damit verbundenen sicheren Element (3) umfasst, wobei HTTP für Hypertext Transfer Protocol und OTA für Over The Air steht, wobei das System so konfiguriert ist, dass es die folgenden Schritte durchführt:
- die HTTP-OTA-Plattform (1) initiiert eine Übertragung einer ersten Benachrichtigung (N1) an das Mobilgerät (2);
- ausgelöst durch die erste Benachrichtigung (N1), die in dem Mobilgerät (2) empfangen wird, eine zweite Benachrichtigung (N2), die ein oder mehrere vorbestimmte STK-Ereignisse (EV) und/oder einen oder mehrere vorbestimmte STK-Befehle (CO) umfasst, wird von dem Mobilgerät (2) an das sichere Element (3) übertragen, wobei STK für SIM Application Toolkit steht;
- ausgelöst durch die zweite Benachrichtigung (N2), die im sicheren Element (3) empfangen wird, eine HTTP-OTA-Sitzung (HS) mit der HTTP-OTA-Plattform (1) wird durch das sichere Element (3) initiiert;
**dadurch gekennzeichnet, dass** die erste Benachrichtigung (N1) ein Sprachanruf (VC) an eine speziell bestimmte Nummer ist.

11. Das System nach Anspruch 10, wobei das System so konfiguriert ist, dass es ein Verfahren nach einem der Ansprüche 2 bis 9 durchführt.

12. Mobilgerät (2) mit einem damit verbundenen sicheren Element (3), wobei das Mobilgerät (2) und das sichere Element (3) so konfiguriert sind, dass sie die folgenden Schritte durchführen:
- ausgelöst durch eine erste Benachrichtigung (N1), die in dem Mobilgerät (2) empfangen wird, eine zweite Benachrichtigung (N2), die ein oder mehrere vorbestimmte STK-Ereignisse (EV) und/oder einen oder mehrere vorbestimmte STK-Befehle (CO) umfasst, wird von dem Mobilgerät (2) an das sichere Element (3) übertragen, wobei STK für SIM Application Toolkit steht;
- ausgelöst durch die zweite Benachrichtigung (N2), die im sicheren Element (3) empfangen wird, eine HTTP-OTA-Sitzung (HS) mit einer HTTP-OTA-Plattform (1) wird durch das sichere Element (3) initiiert, wobei HTTP für Hypertext Transfer Protocol und OTA für Over The Air steht;
**dadurch gekennzeichnet, dass** die erste Benachrichtigung (N1) ein Sprachanruf (VC) an eine speziell bestimmte Nummer ist.

13. Mobilgerät (2) mit einem damit verbundenen sicheren Element (3) nach Anspruch 12, wobei das Mobilgerät (2) und das sichere Element (3) angepasst sind, um in Verfahrensschritten verwendet zu werden, die in dem Mobilgerät und/oder dem sicheren Element gemäß einem der Ansprüche 2 bis 9 durchgeführt werden.

## Revendications

1. Procédé destiné à établir une session HTTP-OTA (HS) entre un élément sécurisé (3) connecté à un dispositif mobile (2) et une plateforme HTTP-OTA (1) dans un réseau mobile, où HTTP désigne un protocole de transfert hypertexte (Hypertext Transfer Protocol) et OTA désigne un mode par liaison radio (Over The Air), dans lequel
- la plateforme HTTP-OTA (1) lance une transmission d'une première notification (N1) vers le dispositif mobile (2) ;
- déclenchée par la première notification (N1) reçue dans le dispositif mobile (2), une seconde notification (N2) comprenant un ou plusieurs événements STK prédéterminés (EV) et/ou une ou plusieurs commandes STK prédéterminées (CO) est transmise par le dispositif mobile (2) à l'élément sécurisé (3), où STK désigne une boîte à outils d'application SIM ;
- déclenchée par la seconde notification (N2) reçue dans l'élément sécurisé (3), une session HTTP-OTA (HS) avec la plateforme HTTP-OTA (1) est lancée par l'élément sécurisé (3),
**caractérisé en ce que** la première notification (N1) est une communication vocale (VC) vers un numéro désigné spécial.

2. Procédé selon la revendication 1, dans lequel pour lancer la transmission de la première notification (N1), la plateforme HTTP-OTA (1) contacte un serveur vocal (5'), avec pour conséquence que le serveur vocal (5') transmet la communication vocale (VC) au dispositif mobile (2).

3. Procédé selon la revendication 1 ou 2, dans lequel le contenu du un ou plusieurs événements prédéterminés STK et/ou la séquence temporelle de transmission des un ou plusieurs événements STK prédéterminés (EV) code des informations, lesquelles ordonnent à l'élément sécurisé (3) de lancer la session HTTP-OTA (HS) avec la plateforme HTTP-OTA (1).

4. Procédé selon l'une quelconque des revendications précédentes, dans lequel les un ou plusieurs événements STK prédéterminés (EV) comprennent un ou plusieurs des événements STK suivants :
communication MT, communication connectée, communication déconnectée, statut de localisation, activité utilisateur, écran inactif disponible, statut lecteur de carte, sélection de langue, arrêt de navigateur, données disponibles, statut de canal.

5. Procédé selon l'une quelconque des revendications précédentes, dans lequel les une ou plusieurs commandes STK prédéterminées (CO) comprennent une ou plusieurs commandes de profil de terminal (TERMINAL PROFILE) et/ou une ou plusieurs commandes de statut (STATUS).

6. Procédé selon l'une quelconque des revendications précédentes, dans lequel suite à la réception de la première notification (N1), le dispositif mobile (2) envoie une instruction TERMINAL PROFILE à l'élément sécurisé (3) afin de lancer un mécanisme HTTP-POLL, où sur la base du mécanisme HTTP-POLL, après un nombre prédéterminé de commandes STATUS transmises par le dispositif mobile (2) à l'élément sécurisé (3), une session HTTP-OTA (HS) avec la plateforme HTTP-OTA (1) est lancée par l'élément sécurisé (3).

7. Procédé selon la revendication 6, dans lequel le dispositif mobile (2) envoie la commande TERMINAL PROFILE à l'élément sécurisé (3) immédiatement après réception de la première notification (N1).

8. Procédé selon la revendication 6, dans lequel le dispositif mobile (2) réinitialise l'élément sécurisé (3) après réception de la première notification (N1), avec pour conséquence que la commande TERMINAL PROFILE est envoyée par le dispositif mobile (2) à l'élément sécurisé (3).

9. Procédé selon l'une quelconque des revendications précédentes, dans lequel
- avant réception de la première notification (N1), un mécanisme HTTP-POLL est déjà lancé, où sur la base du mécanisme HTTP-POLL, après un nombre prédéterminé de commandes STATUS transmises par le dispositif mobile (2) à l'élément sécurisé (3), une session HTTP-OTA (HS) avec la plateforme HTTP-OTA (1) est lancée par l'élément sécurisé (3) ;
- suite à la réception de la première notification (N1), soit le dispositif mobile (2) ajuste le mécanisme HTTP-POLL en raccourcissant un intervalle d'invitation à émettre prédéfini entre des transmissions successives des commandes STATUS du dispositif mobile (2) à l'élément sécurisé (3), ou le dispositif mobile (2) transmet le nombre prédéterminé de commandes STATUS immédiatement à l'élément sécurisé (SE).

10. Système comprenant une plateforme HTTP-OTA (1) dans un réseau mobile, et un dispositif mobile (2) avec un élément sécurisé (3) connecté à celui-ci, où HTTP désigne un protocole de transfert hypertexte et OTA désigne un mode par liaison radio, dans lequel le système est configuré pour exécuter les étapes suivantes :
- la plateforme HTTP-OTA (1) lance une transmission d'une première notification (N1) vers le dispositif mobile (2) ;
- déclenchée par la première notification (N1) reçue dans le dispositif mobile (2), une seconde notification (N2) comprenant un ou plusieurs événements STK prédéterminés (EV) et/ou une ou plusieurs commandes STK prédéterminées (CO) est transmise par le dispositif mobile (2) à l'élément sécurisé (3), où STK désigne une boîte à outils d'application SIM ;
- déclenchée par la seconde notification (N2) reçue dans l'élément sécurisé (3), une session HTTP-OTA (HS) avec la plateforme HTTP-OTA (1) est lancée par l'élément sécurisé (3),
**caractérisé en ce que** la première notification (N1) est une communication vocale (VC) vers un numéro désigné spécial.

11. Système selon la revendication 10, dans lequel le système est configuré pour exécuter le procédé selon l'une quelconque des revendications 2 à 9.

12. Dispositif mobile (2) avec un élément sécurisé (3) connecté à celui-ci, où le dispositif mobile (2) et l'élément sécurisé (3) sont configurés pour exécuter les étapes suivantes :
- déclenchée par une première notification (N1) reçue dans le dispositif mobile (2), une seconde notification (N2) comprenant un ou plusieurs événements STK prédéterminés (EV) et/ou une ou plusieurs commandes STK prédéterminées (CO) est transmise par le dispositif mobile (2) à l'élément sécurisé (3), où STK désigne une boîte à outils d'application SIM ;
- déclenchée par la seconde notification (N2) reçue dans l'élément sécurisé (3), une session HTTP-OTA (HS) avec la plateforme HTTP-OTA (1) est lancée par l'élément sécurisé (3), où HTTP désigne un protocole de transfert hypertexte et OTA désigne un mode par liaison radio,
**caractérisé en ce que** la première notification (N1) est une communication vocale (VC) vers un numéro désigné spécial.

13. Dispositif mobile (2) avec un élément sécurisé (3) connecté à celui-ci selon la revendication 12, où le dispositif mobile (2) et l'élément sécurisé (3) sont aptes à être utilisés dans des étapes de procédé exécutées dans le dispositif mobile et/ou l'élément sécurisé selon l'une quelconque des revendications 2 à 9.
